# FASCICULE DE BREVET EUROPEEN

(11) **EP 3 530 451 B1**
(45) Date de publication et mention de la délivrance du brevet: **12.05.2021**
(21) Numéro de dépôt: 19158027.3
(22) Date de dépôt: 19.02.2019
(51) Int. Cl.: B32B 5/02, B32B 5/08, B32B 5/26, B32B 7/12, B32B 27/08, B32B 27/12, B32B 27/30, B32B 27/40

(54) **STRUCTURE MULTICOUCHE POUR LA REALISATION D'UN REVETEMENT DE SOL**
MEHRSCHICHTIGE STRUKTUR FÜR DIE AUSFÜHRUNG EINES BODENBELAGS
MULTILAYER STRUCTURE FOR FORMING A FLOOR COVERING

(30) Priorité: 27.02.2018 FR 1851723
(43) Date de publication de la demande: 28.08.2019
(73) Titulaire: GERFLOR, 69100 Villeurbanne (FR)
(72) Inventeur: JAUDOUIN, Olivier, 69210 Sourcieux Les Mines (FR); CINAUSERO, Nicolas, 69270 Fontaines Saint Martin (FR)
(74) Mandataire: Cabinet Laurent & Charras

(56) Documents cités:
- EP-A1- 2 754 373
- EP-A2- 0 314 244
- JP-B2- 2 881 354
- US-A1- 2016 257 395

## Description

### DOMAINE TECHNIQUE

La présente invention concerne une structure multicouche pour la réalisation d'un revêtement de sol, notamment pour des véhicules de transport de personnes, par exemple dans le domaine de l'aéronautique.

### ART ANTERIEUR

Il est courant dans le domaine de l'aéronautique d'utiliser des revêtements de sol tuftés, tel que des moquettes, pour recouvrir les allées et les zones sous les sièges des cabines des avions. Ce type de revêtement comprend généralement un envers réalisé à partir d'un polymère et une couche de surface réalisé à partir de fibre (laine, polyamide,...). Ce revêtement ne donne cependant pas entière satisfaction en terme de durabilité, de confort et de nettoyage. Les revêtements disposés dans les allées sont notamment très sollicités par le passage des chariots. Il est ainsi courant que l'intégralité des moquettes d'une cabine soient déposées pour les remplacer, et ce plusieurs fois par ans. Ceci engendre bien évidemment un surcoût d'exploitation et un temps d'immobilisation de l'appareil important qui n'est pas souhaitable.

D'autre part, l'aspect esthétique est un facteur de plus en plus important pour les constructeurs et exploitant d'un appareil. L'utilisation de moquettes limite ainsi la variété des décors et couleurs qui peuvent être proposés. Des décors tels que des imitations de bois sont notamment exclus.

Il est également connu de l'état de la technique, dans le domaine de l'habitat, une structure multicouche comprenant successivement une couche supérieure d'usure transparente composée au moins de polychlorure de vinyle (PVC), un film décor imprimé en PVC et une couche d'envers réalisée par imprégnation d'un plastisol PVC sur un textile non-tissé feutré, le non-tissé étant destiné à être au contact du sol à recouvrir. Ce type de revêtement est couramment utilisé en rénovation de sol carrelés car il permet de réduire le phénomène de « télégraphing », qui se traduit par la transmission des irrégularités du support sur le revêtement de sol. Ce type de revêtement ne peut cependant pas être directement utilisé dans le domaine de l'aéronautique qui impose des normes de résistance au feu, de durabilité, de glissance et de stabilité dimensionnelle très exigeantes.

Les documents EP 2 754 373 A1 et US 2016/257395 A1 décrivent des structures multicouches pour la réalisation de revêtements de sol dans le domaine aéronautique.

### EXPOSE DE L'INVENTION

L'un des buts de l'invention est donc de proposer une structure multicouche pour la réalisation d'un revêtement de sol, notamment pour des véhicules de transport de personnes, présentant de bonnes propriétés de résistance au feu, tout en présentant une meilleure durabilité que des moquettes et des bonnes propriétés de nettoyage, de stabilité dimensionnelle et de limitation du télégraphing.

Un des buts de l'invention est notamment de proposer un revêtement de sol pouvant répondre à la norme FAR 25.853.

Un autre but de l'invention est de proposer une structure multicouche pouvant présenter une grande variété de décors.

A cet effet, il est proposé une structure multicouche pour la réalisation d'un revêtement de sol d'un véhicule de transport, ladite structure multicouche (1) comprenant successivement une couche supérieure d'usure en matière plastique, une première couche adhésive, une armature tissée réalisée à partir de fibres de verre, de fibres de polyamide ou de fibres de polyester, une seconde couche adhésive, une couche de textile non-tissé comprenant des fibres auto-extinguibles, lesdites couches étant liées ensemble pour former la structure multicouche. La couche supérieure d'usure présente une épaisseur comprise entre 0.15 et 1mm, et la première et la seconde couche adhésives sont réalisées à partir de colle polyuréthane ou consistent en un film thermofusible ou un film double face.

La couche de textile non-tissé comprend des fibres auto-extinguibles de manière à améliorer la résistance au feu de la structure multicouche tout en améliorant le confort à la marche du revêtement de sol. Des fibres auto-extinguibles sont généralement des fibres présentant un indice limite d'oxygène (I.L.O) supérieur à 0,21 selon la norme NF EN ISO 4589-2/A1. Afin de présenter un indice limite d'oxygène supérieur à 0,21, la couche de textile non-tissé peut notamment comprendre des fibres choisies parmi les fibres de polyétherimide, de polyester, de polyacrylate, d'aramide, de para-aramide, de polyacrylonytrile oxydé, de polyamide aromatique et leurs mélanges. La quantité de chaque type de fibre pourra aisément être adaptée par l'homme du métier pour atteindre une valeur d'indice limite d'oxygène supérieure à 0,21, notamment à partir des valeur d'indice limite d'oxygène de chaque type de fibre utilisé dans la réalisation de la couche de textile non-tissé.

Avantageusement, la couche de textile non-tissé présente un indice limite d'oxygène supérieur à 0,28 selon la norme NF EN ISO 4589-2/A1. Il a été constaté que des meilleurs résultats de résistance au feu de la structure multicouche étaient obtenus avec une couche de textile non-tissé présentant un indice limite d'oxygène supérieur à 0,28 selon la norme NF EN ISO 4589-2/A1. Cette valeur d'indice limite d'oxygène permet notamment d'obtenir un revêtement de sol selon l'invention pouvant répondre à la norme FAR 25.853 en terme de résistance au feu sans toutefois trop augmenter le prix de fabrication du revêtement de sol.

Avantageusement, la couche de textile non-tissé présente un indice limite d'oxygène supérieur à 0,32 selon la norme NF EN ISO 4589-2/A1. Cette valeur d'indice limite d'oxygène permet notamment d'obtenir un revêtement de sol pouvant répondre à la norme FAR 25.853 en terme de résistance au feu, que la couche supérieure d'usure de la structure multicouche soit réalisée à partir d'un polymère auto-extinguible, tel que le PVC, ou à partir d'un autre polymère pas nécessairement auto-extinguible, tel que le TPU.

Avantageusement, la couche de textile non-tissé présente un indice limite d'oxygène inférieur à 0,42, préférentiellement inférieur à 0,40 selon la norme NF EN ISO 4589-2/A1. Bien que des valeurs d'indice limite d'oxygène supérieure à 0,40 soient envisageables, les matériaux permettant de les atteindre entrainent généralement un surcout du revêtement de sol. De façon préférentielle, la couche de textile non-tissé présente un indice limite d'oxygène compris entre 0,28 et 0,42 et plus préférentiellement compris entre 0,32 et 0,40 afin d'obtenir un bon compromis entre le coût de fabrication et le comportement au feu du revêtement de sol.

De façon préférentielle, la couche de textile non-tissé comprend des fibres choisies parmi les fibres de polyétherimide, de polyester, de polyacrylate, d'aramide, de para-aramide, de polyacrylonytrile oxydé, de polyamide aromatique, et leurs mélanges.

Afin d'améliorer le confort du revêtement de sol tout en conservant de bonnes propriétés de résistance au feu et en limitant les coûts de fabrication, la couche de textile non-tissé peut être réalisée à partir d'un mélange de fibres de polyester et de fibres de polyétherimide, d'un mélange de fibres de polyester et de fibres d'aramide, d'un mélange de fibres de polyacrylate et de fibres d'aramide, d'un mélange de fibres de polyester et de fibres d'aramide, ou d'un mélange de fibres de polyacrylonytrile oxydé et de fibres de para-aramide.

De façon générale, la couche de textile non-tissé peut être liée à une sous-couche adhésive, afin de faciliter la pose du revêtement de sol. Une sous-couche adhésivée peut notamment présenter une face d'envers enduite d'un adhésif. Une sous-couche adhésivée peut également consister en un film adhésif double face, une face étant liée à la couche de textile non-tissé et l'autre face étant destinée à être en contact avec le sol.

L'armature tissée est réalisée à partir de fibres de verre, de fibres de polyamide ou de fibres de polyester.

L'armature tissée améliore la rigidité et la stabilité dimensionnelle de la structure multicouche. L'armature tissée est préférentiellement tissé selon une armure toile, bien qu'une armure sergé ou satin puisse être utilisée. L'armure tissée est de préférence réalisée à partir de fibres de verre, de fibres de polyamide ou de fibres de polyester.

La première et la seconde couche adhésive permettent de lier entre elles la couche supérieure d'usure et l'armature tissée ainsi que l'armature tissée et la couche de textile non-tissé. La première et/ou la seconde couche adhésive peuvent notamment être réalisées à partir de colle polyuréthane. Alternativement la première et/ou la seconde couche adhésive peuvent consister en un film thermofusible ou un film double face, à savoir un film polymère présentant un adhésif sur ses deux faces.

De façon avantageuse et afin d'obtenir une structure multicouche présentant des propriétés antistatiques, il peut être envisagé que l'armature tissée soit imprégnée d'un mélange comprenant une matière plastique et du noir de carbone. Enduire l'armature tissée d'un mélange comprenant une matière plastique et du noir de carbone permet de l'imprégner. L'armature tissée peut également être imprégnée par trempage dans une mélange comprenant une matière plastique et du noir de carbone. A titre d'exemple et de manière à obtenir une structure multicouche pouvant satisfaire la norme NF EN 1815 (2016), il est possible d'imprégner l'armature tissée avec un mélange de polyacétate de vinyle (PVAC) et de noir de carbone de manière à obtenir une imprégnation de 10 à 40 grammes dudit mélange par mètre carrés d'armature tissée. La position centrale, entre la couche supérieure d'usure et la couche de textile non-tissée, de l'armature tissée dans la structure multicouche permet de dissiper parfaitement les charges électriques présentes sur la face supérieure de la couche supérieure d'usure dans toute la surface de la structure multicouche.

De façon avantageuse, l'armature tissée est imprégnée d'un polymère thermoplastique ou thermodurcissable. Afin d'obtenir une structure multicouche présentant une plus grande rigidité et de limiter les phénomènes de télégraphing, il peut être envisagé que l'armature tissée soit imprégnée d'un polymère thermodurcissable. Le polymère thermodurcissable ou thermoplastique peut notamment être choisi dans le groupe comprenant la résine polyester, la résine phénolique, la résine époxy, le polysulfone, la résine vinylester, la résine époxy-acrylique, et leurs mélanges.

La couche supérieure d'usure apporte au revêtement de sol des propriétés de résistance à l'encrassement et de durabilité. La couche supérieure d'usure est par exemple réalisée en polychlorure de vinyle ou en polyuréthane et présente une épaisseur comprise entre 0,15 et 1 mm, préférentiellement entre 0,35 et 0,60 mm. La couche d'usure peut être réalisée par tout moyen connu, notamment par calandrage ou par extrusion au travers d'une filière plate.

Selon l'invention, la couche supérieure d'usure est de préférence transparente à la lumière visible de manière à ce que le décor d'un film imprimé lié en envers de la couche d'usure puisse être visible au travers de la couche supérieure d'usure.

Ainsi, de façon avantageuse, la structure multicouche peut comprendre une couche de film décor imprimé disposée entre la couche supérieure d'usure et la première couche adhésive.

Le film décor est directement imprimé par toute technique connue telle que l'héliogravure ou des techniques d'impression numérique. Une grande variété de décors peut ainsi être proposée. Des solutions d'impression numérique permettent notamment d'obtenir un décor très réaliste. Le film imprimé peut notamment être un film polymère. De façon alternative, un décor peut être directement imprimé en envers de la couche supérieure d'usure transparente.

De façon préférentielle, la structure multicouche comprend une ou plusieurs couches intercalaires en matière plastique disposées entre la couche de film décor imprimé et la première couche adhésive.

La ou les couche(s) intercalaire(s) permettent de diminuer la toxicité des fumées engendrées par la combustion de la couche de surface et/ou du film polymère imprimé, notamment lorsque ceux-ci sont réalisés à partir de polymères n'étant pas auto extinguibles.

De façon préférentielle, la structure multicouche comprend entre la seconde couche adhésive et la couche de textile non-tissé comprenant des fibres auto-extinguibles une seconde armature tissée imprégnée d'un polymère thermodurcissable liée par une troisième couche adhésive. La seconde armature tissée imprégnée d'un polymère thermodurcissable apporte à la structure une plus grande rigidité et permet de limiter les phénomènes de télégraphing. Le polymère thermodurcissable peut notamment être une résine phénolique. La troisième couche adhésive peut notamment être réalisée à partir de colle polyuréthane ou consister en un film thermofusible ou un film double face, à savoir un film polymère présentant un adhésif sur ses deux faces.

### DESCRIPTION SOMMAIRE DES FIGURES

D'autres avantages et caractéristiques ressortiront mieux de la description qui va suivre, donnée à titre d'exemple non limitatif, de la structure multicouche selon l'invention, à partir des dessins annexés dans lesquels :
- la figure 1 est une représentation schématique et en coupe transversale d'un premier exemple de réalisation de la structure multicouche selon l'invention ;
- la figure 2 est une représentation schématique similaire à celle de la figure 1, illustrant un second mode de réalisation de la structure multicouche selon l'invention ;
- la figure 3 est une représentation schématique similaire à celle de la figure 1, illustrant un troisième mode de réalisation de la structure multicouche selon l'invention ;
- la figure 4 est une représentation schématique similaire à celle de la figure 1, illustrant un quatrième mode de réalisation de la structure multicouche selon l'invention ;

### DESCRIPTION DETAILLEE DE L'INVENTION

L'invention concerne une structure multicouche (1) pour la réalisation d'un revêtement de sol notamment pour des véhicules de transport de personnes, par exemple dans le domaine de l'aéronautique. La structure multicouche (1) selon l'invention présente de bonnes propriétés de résistance au feu, une meilleure durabilité que des moquettes et des bonnes propriétés de nettoyage, de stabilité dimensionnelle et de limitation du télégraphing.

La structure multicouche (1) selon l'invention peut se présenter sous toute forme, notamment en panneau, en dalle, et de préférence en rouleau.

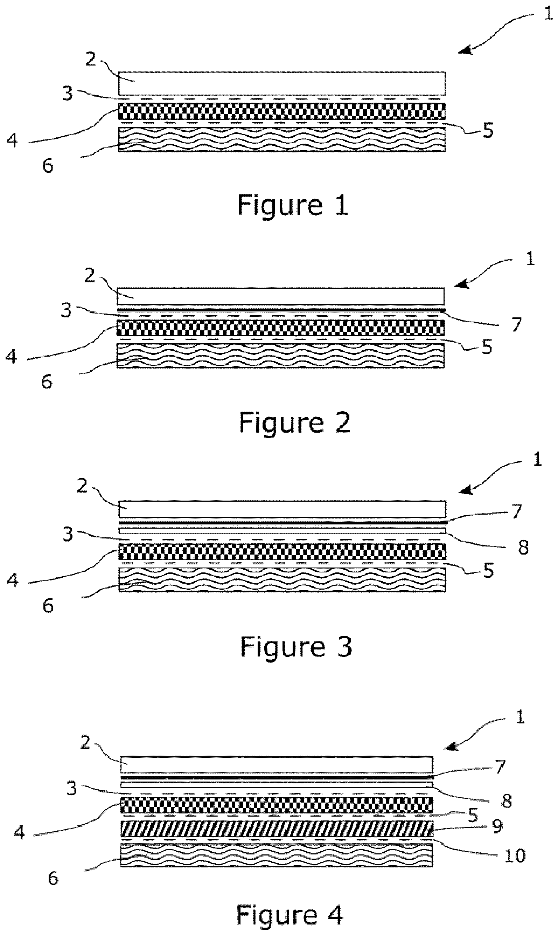

En référence aux figures 1 à 4, la structure multicouche (1) comprend successivement une couche supérieure d'usure (2) en matière plastique, une première couche adhésive (3), une armature tissée (4), une seconde couche adhésive (5), une couche de textile non-tissé (6) comprenant des fibres auto-extinguibles, lesdites couches étant liées ensemble pour former la structure multicouche (1). Les fonctions principales de la couche supérieure d'usure en matière plastique (2) sont la maîtrise de la glissance, la résistance à l'usure et la facilité de nettoyage. La couche supérieure d'usure peut éventuellement être grainée ou vernie en surface.

La couche supérieure d'usure (2) peut être constituée par une couche calandrée ou extrudée, voire pressée. Elle peut notamment être obtenue à partir de PVC plastifié. De façon générale et d'une manière bien connue de l'homme du métier, une couche supérieure d'usure peut être obtenue à partir d'une composition comprenant un polymère, par exemple du PVC ou du polyuréthane, un plastifiant et éventuellement des charges, des stabilisants, des lubrifiants, des additifs et des pigments. La couche supérieure d'usure peut être constituée d'une ou plusieurs couches.

L'armature tissée (4) peut difficilement être liée avec une couche en matière plastique ou une couche de textile non-tissé (6) avec des techniques classiques de lamination à chaud. Notamment, si la couche supérieure d'usure (2) est laminée à chaud sur l'armature tissée (4) celles-ci ne présentent pas une bonne adhérence et se délaminent facilement. Ainsi la couche supérieure d'usure (2) n'est pas directement liée à l'armature tissée (4) sans couche intermédiaire. De ce fait, la première et la seconde couche adhésive (3,5) permettent de lier entre elles la couche supérieure d'usure (2) et l'armature tissée (4) ainsi que l'armature tissée et la couche de textile non-tissé sans présenter de risque de délamination. La première et/ou la seconde couche adhésive peuvent notamment être réalisées à partir de colle polyuréthane. Alternativement la première et/ou la seconde couche adhésive peuvent consister en un film thermofusible tel qu'un film copolyamide ou polyuréthane thermoplastique (TPU) ou encore un film co-polyester (coPes).

L'armature tissée (4) améliore la rigidité et la stabilité dimensionnelle de la structure multicouche. L'armature tissée (4) est préférentiellement tissée selon une armure toile, bien qu'une armure sergé ou satin puisse être utilisée. L'armure tissée (4) est réalisée à partir de fibres de verre, de fibres de polyamide ou de fibres de polyester. Les fibres de verre peuvent notamment présenter un titrage compris entre 22 Tex et 68 Tex. Les fibres de polyester peuvent notamment présenter un titrage de l'ordre de 1100 décitex. Les fibres de polyamide peuvent notamment présenter un titrage compris entre 44 décitex et 78 décitex.

L'armature tissée (4) présente généralement une épaisseur comprise entre 150 µm et 300 µm, préférentiellement entre 215 µm et 225 µm. L'armature tissée (4) présente généralement une masse surfacique comprise entre 150 et 300 g/m² bien que cette valeur dépende de la nature des fibres utilisées.

L'armature tissée (4) présente avantageusement, notamment lorsqu'elle est réalisée à partir de fibres de verre, un nombre de fils de chaîne compris entre 17 et 18 fils par centimètres et un nombre de fils de trame compris entre 13,5 et 14 fils par centimètres. En dessous de 17 fils de chaîne par centimètres ou de 13,5 fils de trame par centimètres, l'armature tissée (4) obtenue est trop poreuse, notamment avec un titrage compris entre 22 et 68 Tex. Au-dessus de 18 fils de chaîne par centimètres ou de 14 fils de trame par centimètres, l'armature tissée est difficilement réalisable avec des outils de production classiques, notamment avec un titrage compris entre 22 et 68 Tex.

La couche de textile non-tissé (6) comprend des fibres auto-extinguibles de manière à améliorer la résistance au feu de la structure multicouche tout en améliorant le confort à la marche du revêtement de sol. La couche de textile non-tissé peut notamment comprendre des fibres choisies parmi les fibres de polyétherimide, de polyester, de polyacrylate, d'aramide, de para-aramide, de polyacrylonytrile oxydé, de polyamide aromatique et leurs mélanges. La quantité de chaque type de fibre pourra aisément être adaptée par l'homme du métier pour atteindre une valeur d'indice limite d'oxygène supérieure à 0,21, à 0,28 ou à 0,32 selon la norme NF EN ISO 4589-2/A1, notamment à partir des valeur d'indice limite d'oxygène de chaque type de fibre utilisé dans la réalisation de la couche de textile non-tissé et en fonction des applications souhaitées.

Afin d'améliorer le confort du revêtement de sol tout en conservant de bonnes propriétés de résistance au feu et en limitant les coûts de fabrication, la couche de textile non-tissé (6) peut être réalisée à partir d'un mélange de fibres de polyester et de fibres de polyétherimide, d'un mélange de fibres de polyester et de fibres d'aramide, d'un mélange de fibres de polyacrylate et de fibres d'aramide, d'un mélange de fibres de polyester et de fibres d'aramide, ou d'un mélange de fibres de polyacrylonytrile oxydé et de fibres de para-aramide.

La couche de textile non-tissé (6) peut être réalisée par tous moyens connus, notamment par voie sèche, par voie fondue, par voie humide ou encore par formation in situ. Des techniques connues de consolidation de la couche de textile non-tissé (6) peuvent également être employées, notamment la consolidation chimique ou hydraulique. De façon préférentielle, la couche de textile non-tissé (6) est réalisée par voie sèche comprenant une étape de consolidation par aiguilletage permettant de lier les fibres entre elles.

De façon préférentielle, les fibres de la couche de textile non-tissé (6) ne sont pas partiellement voire totalement imprégnées d'une résine thermoplastique et/ou thermodurcissable afin de ne pas limiter leur déplacement dans la couche de textile non-tissé (6) et de conserver de bonnes propriétés de souplesse.

La couche de textile non-tissé (6) présente généralement une épaisseur comprise entre 0,5 mm et 1 cm, préférentiellement entre 3 mm et 5 mm. Une épaisseur inférieure à 3 mm diminue généralement le confort à la marche de la structure multicouche. Une épaisseur supérieure à 5mm dégrade significativement la résistance au poinçonnement de la structure multicouche. De fait, une épaisseur de la couche de textile non-tissé (6) comprise entre 3 mm et 5 mm permet d'obtenir un bon compromis entre le confort et la résistance au poinçonnement.

La couche de textile non-tissé (6) présente avantageusement une masse surfacique comprise entre 50 g/m² et 1000 g/m², préférentiellement entre 250 g/m² et 450g/m². Une masse surfacique supérieure à 450g/m² peut notamment dégrader la résistance au poinçonnement de la structure multicouche (1). Une masse surfacique inférieure à 250g/m² peut au contraire améliorer la résistance au poinçonnement mais dégrader le confort à la marche de la structure. De fait, une masse surfacique comprise entre 250 g/m² et 450g/m², permet d'obtenir un bon compromis entre le confort et la résistance au poinçonnement.

Selon une première forme de réalisation illustrée à la figure 1, la structure multicouche (1) comprend successivement une couche supérieure d'usure (2) en matière plastique, une première couche adhésive (3), une armature tissée (4), une seconde couche adhésive (5), une couche de textile non-tissé (6) comprenant des fibres auto-extinguibles, lesdites couches étant liées ensemble pour former la structure multicouche (1). La couche supérieure d'usure en matière plastique (2) est liée à l'armature tissée (4) par l'intermédiaire de la première couche adhésive (3). L'armature tissée (4) est liée la couche de textile non-tissé (6) par l'intermédiaire d'une seconde couche adhésive (5).

Selon une deuxième forme de réalisation illustrée à la figure 2, la structure multicouche (1) comprend successivement une couche supérieure d'usure transparente en matière plastique (2), un film décor imprimé (7) disposée entre la couche supérieure d'usure (2) et la première couche adhésive (3) et visible au travers de la couche supérieure (2), une première couche adhésive (3), une armature tissée (4), une seconde couche adhésive (5) et une couche de textile non-tissé comprenant des fibres auto-extinguibles, lesdites couches étant liées ensemble pour former la structure multicouche (1).

Le film décor imprimé (7) est directement imprimé par toute technique connue telle que l'héliogravure ou des techniques d'impression numérique. Une grande variété de décors peuvent ainsi être proposés. Le film imprimé peut notamment être un film polymère réalisé à partir de polychlorure de vinyle (PVC), de polyéthylène-térephtalate-glycol (PETG) ou encore de poly(éthylène téréphtalate) (PET), d'une épaisseur généralement comprise entre 0,2 et 0,5 mm. Le film décor imprimé (7) et la couche supérieure d'usure (2) sont liés par tout moyen connu tel que la lamination à chaud.

Dans ce mode de réalisation le film décor imprimé (7) ne peut pas être laminé à chaud sur l'armature tissée (4) pour les lier. De fait, la première couche adhésive (3) permet de lier entre eux le film décor imprimé (7) et l'armature tissée (4) sans présenter de risque de délamination.

Selon une troisième forme de réalisation illustrée à la figure 3, la structure multicouche (1) comprend successivement une couche supérieure d'usure transparente en matière plastique (2), un film décor imprimé (7) visible au travers de la couche supérieure (2), une couche intercalaire en matière plastique (8) disposée entre la couche de film décor imprimé (7) et une première couche adhésive (3), une armature tissée (4), une seconde couche adhésive (5) et une couche de textile non-tissé comprenant des fibres auto-extinguibles.

La couche intercalaire en matière plastique (8) permet de diminuer la toxicité des fumées engendrées par la combustion de la couche supérieure d'usure et/ou du film polymère imprimé, notamment lorsque ceux-ci sont réalisés à partir de polymère n'étant pas auto extinguibles. Il est par exemple possible de réaliser une structure multicouche comprenant une couche supérieure d'usure en polyuréthane thermoplastique (TPU) et/ou un film polymère imprimé en polyéthylène-térephtalate-glycol (PETG) en association avec une couche intercalaire réalisée à partir de polychlorure de vinyle (PVC). La présence de la couche intercalaire réalisée à partir de PVC permet de limiter la propagation de flammes et l'apparition de fumées toxiques lors de la combustion de la structure multicouche. Ce mode de réalisation permet notamment d'obtenir un revêtement de sol conforme à la norme ABD0031. L'épaisseur de la couche intercalaire est généralement comprise entre 0,2 mm et 0,5 mm.

Dans ce mode de réalisation la couche intercalaire en matière plastique (8) ne peut pas être laminé à chaud sur l'armature tissée (4) pour les lier. De fait, la première couche adhésive (3) permet de lier entre eux la couche intercalaire en matière plastique (8) et l'armature tissée (4) sans présenter de risque de délamination.

Selon une quatrième forme de réalisation illustrée à la figure 4, la structure multicouche (1) comprend successivement une couche supérieure d'usure transparente en matière plastique (2), une première couche adhésive (3), une armature tissée (4), une seconde couche adhésive (5), une seconde armature tissée imprégnée d'un polymère thermodurcissable (9), une troisième couche adhésive (10) et une couche de textile non-tissé comprenant des fibres auto-extinguibles (6). La seconde armature tissée imprégnée d'un polymère thermodurcissable (9) apporte à la structure (1) une plus grande rigidité et permet de limiter les phénomènes de télégraphing. Le polymère thermodurcissable peut notamment être une résine phénolique. La troisième couche adhésive (10) peut notamment être réalisée à partir de colle polyuréthane ou consister en un film thermofusible ou un film double face, à savoir un film polymère présentant un adhésif sur ses deux faces.

### Exemple 1 :

Il est réalisée une structure multicouche (1) selon l'invention et telle que décrite selon la figure 2.

Cette structure multicouche (1) comprend successivement :
- une couche supérieure d'usure (2) transparente en PVC calandrée de 0,45 mm d'épaisseur
- Un film décor imprimé (7) en PVC de 0,3 mm d'épaisseur. Le film décor est imprimé en impression numérique puis complexé à la couche supérieure d'usure par un procédé de lamination à chaud
- Une première couche de colle polyuréthane (3) de 35g/m²
- Une armature tissé (4) en fibres de verre de 68 Tex. L'armature présente une armure toile, une masse surfacique de 219 g/m², une épaisseur de 0,2 mm, 17,4 fils de chaîne par centimètre et 13,8 fils de trame par centimètre
- Une seconde couche de colle polyuréthane (5) de 90g/m²
- Une couche de textile non-tissé (6) de 300g/m² et de 3 mm d'épaisseur. La couche de textile non-tissé est réalisée à partir d'un mélange de fibres de polyétherimide et de fibres de polyester. Cette couche de textile non-tissé est commercialisée par la société National Nonwoven selon la dénomiation commerciale KushnBlok® Composite Cushioning Felt (CCF).

La structure multicouche ainsi formée peut être utilisée en tant que revêtement de sol dans le domaine de l'aéronautique, se présentant sous forme de rouleau.

Différents tests sont effectués sur le revêtement de sol ainsi obtenu. Les résultats de ces test sont présentés dans le tableau 1.

**Tableau 1**

| Test | Norme | Valeur |
|---|---|---|
| Résistance à l'abrasion | ISO9352 (2012) | 143 ± 3 mg |
| Résistance à l'indentation - poinçonnement | NF EN ISO 24343-1 (avril 2012) | 0,4 mm |
| Résistance à l'inflammabilité | | |
| Durée de combustion | FAR 25.853 | 4 ± 1 s |
| Longueur brulée | | 80 ± 10 mm |
| Durée de combustion des gouttes | | 0 s |
| Glissance | FAR 25.793 | |
| Coefficient de friction dynamique sur cuir sec | MIL-W-5044C | 0.55 ± 0.01 |
| Poids | ISO 2286 (2016) | 1533 ± 12 g/m² |
| Epaisseur | ISO 2286 (2016) | 4,52 ± 0,08 mm |
| Stabilité dimensionnelle L | ISO 23999 (2012) | 0,10 ± 0,03 % |
| Stabilité dimensionnelle T | ISO 23999 (2012) | 0,10 ± 0,04 % |

Il ressort des résultats de ces tests que le revêtement de sol selon l'invention est suffisamment durable pour satisfaire les tests de résistance à l'abrasion et au poinçonnement selon l'ISO9352 (2012) et la NF EN ISO 24343-1 (avril 2012) . D'autre part, un test visuel ne constate pas d'apparition de défauts sur la face supérieure de la couche de surface dus au télégraphing d'aspérités du support.

Le revêtement de sol obtenu satisfait également la norme FAR 25.853 en terme de résistance à l'inflammabilité ce qui rend son utilisation possible dans des avions.

Les résultats de stabilité dimensionnelle selon la norme EN 434 sont également très satisfaisants. Le confort à la marche du revêtement de sol obtenu est très satisfaisant, la couche de textile non-tissé lui conférant un bon amorti.

Il ressort de ce qui précède que l'invention fournit bien une structure multicouche pour la réalisation d'un revêtement de sol, notamment pour des véhicules de transport de personnes, présentant de bonnes propriétés de résistance au feu, tout en présentant une très bonne durabilité et des bonnes propriétés de nettoyage, de stabilité dimensionnelle. L'invention permet notamment l'obtention d'un revêtement de sol répondant à la norme FAR 25.853.

### Exemple 2 :

Il est réalisée une structure multicouche (1) selon l'invention similaire à l'exemple 1.

Cette structure multicouche (1) comprend successivement :
- une couche supérieure d'usure (2) transparente en PVC calandrée de 0,45 mm d'épaisseur
- Un film décor imprimé (7) en PVC de 0,3 mm d'épaisseur. Le film décor est imprimé en impression numérique puis complexé à la couche supérieure d'usure par un procédé de lamination à chaud
- Une première couche de colle polyuréthane (3) de 35g/m²
- Une armature tissé (4) en fibres de verre de 68 Tex. L'armature présente une armure toile, une masse surfacique de 219 g/m², une épaisseur de 0,2 mm, 17,4 fils de chaîne par centimètre et 13,8 fils de trame par centimètre
- Une seconde couche de colle polyuréthane (5) de 90g/m²
- Une couche de textile non-tissé (6) de 300g/m² et de 3,2 mm d'épaisseur. La couche de textile non-tissé est réalisée à partir d'un mélange de fibres de polyétherimide et de fibres de polyester. Cette couche de textile non-tissé présente un indice limite d'oxygène de 41,3% (0,413).

Le revêtement de sol ainsi obtenu est suffisamment durable pour satisfaire les tests de résistance à l'abrasion et au poinçonnement selon l'IS09352 (2012) et la NF EN ISO 24343-1 (avril 2012) . D'autre part, un test visuel ne constate pas d'apparition de défauts sur la face supérieure de la couche de surface dus au télégraphing d'aspérités du support.

Celui-ci satisfait également la norme FAR 25.853 en terme de résistance à l'inflammabilité ce qui rend son utilisation possible dans des avions.

Les résultats de stabilité dimensionnelle selon la norme EN 434 ainsi que le confort à la marche du revêtement de sol obtenu est très satisfaisant, la couche de textile non-tissé lui conférant un bon amorti.

### Exemple 3 :

Il est réalisée une structure multicouche (1) selon l'invention similaire à l'exemple 2 à la seule différence que la couche de textile non-tissé (6) présente une masse surfacique de 250g/m² et 2,7 mm d'épaisseur. La couche de textile non-tissé (6) est réalisée à partir d'un mélange de fibres d'aramide et de polyacrylate. Cette couche de textile non-tissé présente un indice limite d'oxygène de 33,1% (0,331).

Le revêtement de sol ainsi obtenu est suffisamment durable pour satisfaire les tests de résistance à l'abrasion et au poinçonnement selon l'ISO9352 (2012) et la NF EN ISO 24343-1 (avril 2012) . D'autre part, un test visuel ne constate pas d'apparition de défauts sur la face supérieure de la couche de surface dus au télégraphing d'aspérités du support.

Celui-ci satisfait également la norme FAR 25.853 en terme de résistance à l'inflammabilité ce qui rend son utilisation possible dans des avions.

Les résultats de stabilité dimensionnelle selon la norme EN 434 ainsi que le confort à la marche du revêtement de sol obtenu est très satisfaisant, la couche de textile non-tissé lui conférant un bon amorti.

## Revendications

1. Structure multicouche (1) pour la réalisation d'un revêtement de sol d'un véhicule de transport, ladite structure multicouche (1) comprenant successivement une couche supérieure d'usure (2) en matière plastique, une première couche adhésive (3), une armature tissée (4) réalisée à partir de fibres de verre, de fibres de polyamide ou de fibres de polyester, une seconde couche adhésive (5), une couche de textile non-tissé (6) comprenant des fibres auto-extinguibles, lesdites couches étant liées ensemble pour former la structure multicouche (1), **caractérisée en ce que** la couche supérieure d'usure (2) présente une épaisseur comprise entre 0,15 et 1mm, et **en ce que** la première (3) et la seconde couche adhésives (5) sont réalisées à partir de colle polyuréthane ou consistent en un film thermofusible ou un film double face.

2. Structure multicouche (1) selon la revendication 1, **caractérisée en ce que** la couche de textile non-tissé (6) présente un indice limite d'oxygène supérieur à 0,28 selon la norme NF EN ISO 4589-2/A1.

3. Structure multicouche (1) selon la revendication 2, **caractérisée en ce que** la couche de textile non-tissé (6) présente un indice limite d'oxygène supérieur à 0,32 selon la norme NF EN ISO 4589-2/A1.

4. Structure multicouche (1) selon la revendication 1, **caractérisée en ce que** la couche de textile non-tissé (6) comprend des fibres choisies parmi les fibres de polyétherimide, de polyester, de polyacrylate, d'aramide, de para-aramide, de polyacrylonytrile oxydé, de polyamide aromatique, et leurs mélanges.

5. Structure multicouche (1) selon la revendication 4, **caractérisée en ce que** la couche de textile non-tissé (6) est réalisée à partir d'un mélange de fibres de polyester et de fibres de polyétherimide, d'un mélange de fibres de polyester et de fibres d'aramide, d'un mélange de fibres de polyacrylate et de fibres d'aramide, d'un mélange de fibres de polyester et de fibres d'aramide, ou d'un mélange de fibres de polyacrylonytrile oxydé et de fibres de para-aramide.

6. Structure multicouche (1) selon la revendication 1, **caractérisée en ce qu'**elle comprend une couche de film décor imprimé (7) disposée entre la couche supérieure d'usure (2) et la première couche adhésive (3).

7. Structure multicouche (1) selon la revendication 6, **caractérisée en ce qu'**elle comprend une couche intercalaire (8) en matière plastique, disposée entre la couche de film décor imprimé (7) et la première couche adhésive (3).

8. Structure multicouche (1) selon la revendication 1, **caractérisée en ce que** l'armature tissée (4) est imprégnée d'un polymère thermoplastique ou thermodurcissable.

9. Structure multicouche (1) selon la revendication 8, **caractérisée en ce que** l'armature tissée (4) est imprégnée d'un mélange comprenant une matière plastique et du noir de carbone.

## Patentansprüche

1. Mehrschichtige Struktur (1) zur Herstellung eines Bodenbelags für ein Transportfahrzeug, diese mehrschichtige Struktur (1) enthält nacheinander eine oberste Verschleißschicht (2) aus Kunststoff, eine erste Kleberschicht (3), eine Gewebeeinlage (4), ausgeführt aus Glasfasern, Polyamidfasern oder Polyesterfasern, eine zweite Kleberschicht (5) und eine nicht gewebte Textilschicht (6) mit selbstverlöschenden Fasern, diese Schichten sind miteinander so verbunden, dass sie eine mehrschichtige Struktur (1) bilden, ***dadurch gekennzeichnet, dass*** die oberste Verschleißschicht (2) eine Dicke zwischen 0,15 und 1 mm aufweist, und ***dass*** die erste (3) und die zweite Kleberschicht (5) mit Polyurethankleber ausgeführt wird oder aus einer Schmelzklebefolie oder einer doppelseitigen Klebefolie besteht.

2. Mehrschichtige Struktur (1) nach Anspruch 1, ***dadurch gekennzeichnet, dass*** die nicht gewebte Textilschicht (6) einen Sauerstoffindex von über 0,28 laut Norm NF EN ISO 4589-2/A1 aufweist.

3. Mehrschichtige Struktur (1) nach Anspruch 2, ***dadurch gekennzeichnet, dass*** die nicht gewebte Textilschicht (6) einen Sauerstoffindex von über 0,32 laut Norm NF EN ISO 4589-2/A1 aufweist.

4. Mehrschichtige Struktur (1) nach Anspruch 1, ***dadurch gekennzeichnet, dass*** die nicht gewebte Textilschicht (6) Fasern enthält, die ausgewählt werden aus Polyetherimid-, Polyester-, Polyacrylat-, Aramid-, Para-aramid, oxidierte Polyacrylnitril-, aromatische Polyamidfasern und ihren Mischungen.

5. Mehrschichtige Struktur (1) nach Anspruch 4, ***dadurch gekennzeichnet, dass*** die nicht gewebte Textilschicht (6) ausgeführt wird aus einer Mischung aus Polyesterfasern und Polyetherimidfasern, einer Mischung aus Polyesterfasern und Aramidfasern, einer Mischung aus Polyacrylatfaser und Aramidfasern, einer Mischung aus Polyesterfasern und Aramidfasern, oder einer Mischung aus oxidierten Polyacrylnitrilfasern und Para-Aramidfasern.

6. Mehrschichtige Struktur (1) nach Anspruch 1, ***dadurch gekennzeichnet, dass*** sie eine gedruckte Dekorfolienschicht (7) enthält, angeordnet zwischen der obersten Verschleiß schicht (2) und der ersten Kleberschicht (3).

7. Mehrschichtige Struktur (1) nach Anspruch 6, ***dadurch gekennzeichnet, dass*** sie eine Zwischenschicht (8) aus Kunststoff enthält, angeordnet zwischen der gedruckten Dekorfolienschicht (7) und der ersten Kleberschicht (3).

8. Mehrschichtige Struktur (1) nach Anspruch 1, ***dadurch gekennzeichnet, dass*** die Gewebeeinlage (4) mit einem thermisch verformbaren oder thermisch härtbaren Polymer imprägniert ist.

9. Mehrschichtige Struktur (1) nach Anspruch 8, ***dadurch gekennzeichnet, dass*** die Gewebeeinlage (4) mit einer Mischung imprägniert ist, die Kunststoff und Rußschwarz enthält.

## Claims

1. A multilayer structure (1) for the production of a floor covering of a transport vehicle, said multilayer structure (1) successively comprising an upper wear layer (2) of plastic material, a first adhesive layer (3), a woven reinforcement (4) produced from glass fibers, polyamide fibers or polyester fibers, a second adhesive layer (5), a non-woven textile layer (6) comprising self-extinguishing fibers, said layers being bonded together to form the multilayer structure (1), **characterized in that** the upper wear layer (2) has a thickness of between 0.15 and 1 mm, and **in that** the first (3) and second (5) adhesives layers are produced from polyurethane glue or consist of a hot melt film or a double face film.

2. The multilayer structure (1) according to claim 1, **characterized in that** the non-woven textile layer (6) has an oxygen limiting index of more than 0.28 in accordance with NF EN ISO 4589-2/A1 standards.

3. The multilayer structure (1) according to claim 2, **characterized in that** the non-woven textile layer (6) has an oxygen limiting index of more than 0.32 in accordance with NF EN ISO 4589-2/A1 standards.

4. The multilayer structure (1) according to claim 1, **characterized in that** the non-woven textile layer (6) comprises fibers chosen from among fibers of polyetherimide, polyester, polyacrylate, aramide, para-aramide, oxidized polyacrylonitrile, aromatic polyamide and mixtures thereof.

5. The multilayer structure (1) according to claim 4, **characterized in that** the non-woven textile layer (6) is produced from a mixture of polyester fibers and polyetherimide fibers, a mixture of polyester fibers and aramide fibers, a mixture of polyacrylate fibers and aramide fibers, a mixture of polyester fibers and aramide fibers, or a mixture of oxidized polyacrylonytrile fibers and para-aramide fibers.

6. The multilayer structure (1) according to claim 1, **characterized in that** it comprises a layer of printed decorative film (7) disposed between the upper wear layer (2) and the first adhesive layer (3).

7. The multilayer structure (1) according to claim 6, **characterized in that** it comprises an intermediate layer (8) of plastic material, disposed between the layer of printed decorative film (7) and the first adhesive layer (3).

8. The multilayer structure (1) according to claim 1, **characterized in that** the woven reinforcement (4) is impregnated with a thermoplastic or thermosetting polymer.

9. The multilayer structure (1) according to claim 8, **characterized in that** the woven reinforcement (4) is impregnated with a mixture comprising a plastic material and carbon black.
